# NEUE EUROPÄISCHE PATENTSCHRIFT

(11) **EP 2 241 781 B2**
(45) Veröffentlichungstag und Bekanntmachung des Hinweises auf die Entscheidung über den Einspruch: **25.03.2015**
(45) Hinweis auf die Patenterteilung: 31.08.2011
(21) Anmeldenummer: 10000754.1
(22) Anmeldetag: 26.01.2010
(51) Int. Cl.: F16H 1/28, F16H 57/02

(54) **Getriebe, insbesondere Planetengetriebe mit einem Flansch und einem Hohlrad**
Gear, in particular planetary gear with a flange and a hollow wheel
Engrenage, notamment train épicycloïdal doté d'une bride et d'une roue creuse

(30) Priorität: 14.04.2009 DE 102009017014
(43) Veröffentlichungstag der Anmeldung: 20.10.2010
(73) Patentinhaber: IMS Gear GmbH, 78166 Donaueschingen (DE)
(72) Erfinder: Riester, Thomas, 78052 Villingen-Schwenningen (DE); Poyraz, Erkan, 78166 Donaueschingen (DE)
(74) Vertreter: Westphal, Mussgnug & Partner Patentanwälte mbB

(56) Entgegenhaltungen:
- WO-A-03/050434
- DE-A1- 2 910 934
- DE-A1- 10 053 270
- DE-A1- 10 123 548
- DE-A1- 10 251 499
- DE-A1- 19 738 429
- DE-A1-102006 035 228
- DE-U- 1 913 936
- JP-A- S5 743 051
- JP-A- 2009 024 436
- Kopien aus DUBBEL, Taschenbuch für den Maschinenbau, 21. Auflage
- Technische Zeichnungen bzg. offenkundiger Vorbenutzung Johnson Getriebe Motor, Teile Nr. 1999-10 POO64EP (NVG 48408), in Großserie vertrieben u.a. im März 2009

## Beschreibung

### Beschreibung

### Getriebe

Die Erfindung bezieht sich auf ein Getriebe, insbesondere ein Planetengetriebe, mit den oberbegrifflichen Merkmalen gemäß Patentanspruch 1.

Ein solches Getriebe ist aus dem Stand der Technik bekannt. Weitere Getriebe sind in der DE 101 23 548 A, der DE 102 51 499 A und der DE 197 38 429 A beschrieben.

Ein Planetengetriebe umfasst üblicherweise mehrere Planetenradträger. Die Planetenradträger sind mit ihrer zentralen Drehachse auf einer Rotationsachse angeordnet, welche sich in axialer Richtung von einem Motorritzel durch das Planetengetriebe bis zu einem Abtrieb erstreckt. Die Planetenradträger weisen achsparallel zur Rotationsachse mehrere Planetenradachsen auf, auf welchen jeweils ein Planetenrad gelagert ist. Die Dimensionierung der Komponenten ist dabei so gewählt, dass die Planetenräder mit ihrem Zahnkranz in das Motorritzel eingreifen. Außerdem greifen die Planetenräder mit ihren Zahnkränzen radial außenseitig in einen Hohlrad-Zahnkranz eines die Anordnung umgebenden Hohlrades ein. Eines oder mehrere solcher Hohlräder sind dabei gemäß einer allgemein bekannten Ausgestaltungsform von Planetengetrieben als Getriebegehäuse ausgebildet. Üblicherweise weisen die Planetenradträger auf der den Planetenrädern gegenüberliegenden Seite ein sich längs der axialen Richtung erstreckendes Sonnenrad auf, welches wiederum in die Planetenräder eines nachfolgenden Planetenradträgers eingreift. Der letzte Planetenradträger einer solchen Anordnung ist mit einer Abtriebswelle fest verbunden.

Zur Verbindung eines solchen Planetengetriebes mit daran angekoppelten Getriebekomponenten wie einem Motor auf einer Seite und weiteren Getriebekomponenten auf der anderen Seite ist in axialer Richtung auf beiden Seiten des Getriebegehäuses ein Flansch angesetzt. Bei einer Ausgestaltung mit feststehendem Hohlrad kann die Verbindung der Flansche und des einen oder der mehreren Hohlräder auf einfache Art und Weise dadurch erfolgen, dass in deren Umfangsbereich achsparallele Bohrungen durch diese hindurchführen, wobei zur Befestigung eine Schraube oder ein Bolzen durch diese achsparallelen Bohrungen geführt ist.

Bekannt ist außerdem eine Ausführungsform, bei welcher die den innseitigen Zahnkranz aufweisenden Hohlräder mit den Flanschen über eine radiale Verschraubung positioniert und gesichert werden. Eine zusätzliche Sicherung gegen ein Herausdrehen erfolgt teilweise über mikroverkapselt beschichtete Schrauben. Eine spielfreie Verbindung der Hohlräder mit den Flanschen erfolgt auch über eine zur Rotationsachse achsparallele Schraubverbindung. Um ein radiales Verdrehen zwischen Hohlrad und Flansch zu verhindern, werden diese zusätzlich über eine Steckverzahnung gehalten.

Die Aufgabe der Erfindung besteht darin, ein raumsparendes Getriebe, insbesondere ein Planetengetriebe bereitzustellen, welches eine trotzdem sichere und spielfreie Verbindung des Flansches und eines dazu benachbarten Hohlrades ermöglicht. Insbesondere soll ein Geräuschverhalten des Planetengetriebes verbessert werden.

Diese Aufgabe wird durch das Getriebe mit den Merkmalen des Patentanspruchs 1 gelöst.

Erfindungsgemäß ist das Paar aus einer solchen Flanschbohrung und einer solchen Hohlrad-Bohrung in axialer Richtung zumindest teilweise überlappend und zugleich teilweise zueinander um eine Versatzdifferenz versetzt angeordnet. Durch eine solche Ausgestaltung wird das Hohlrad bzw. der Hohlrad-Vorsprung beim Eindrücken des Stifts in die Bohrungen gegen den Flanschanschlag gedrückt und so in axialer Richtung fest mit dem Flansch verspannt.

Vorteilhafte Ausgestaltungen sind Gegenstand von abhängigen Ansprüchen.

Bevorzugt wird demgemäß ein Planetengetriebe mit zumindest einem Flansch zum Anpassen des Planetengetriebes an eine Antriebskomponente und mit zumindest einem Hohlrad, welches planetengetriebeseitig mit dem Flansch fest verbunden ist, wobei der Flansch zumindest eine radiale Flanschbohrung aufweist, das Hohlrad zumindest eine radiale Hohlrad-Bohrung aufweist und ein Stift durch ein Paar aus einer solchen radialen Flanschbohrung und einer solchen radialen Hohlrad-Bohrung geführt ist und dabei den Flansch und das Hohlrad fest miteinander verspannt.

Der Flansch weist insbesondere einen Flansch-Vorsprung bzw. gleichbedeutend eine umfangsseitige Verjüngung auf, welche sich planetengetriebeseitig in achsparalleler Richtung erstreckt, wobei die zumindest eine Flanschbohrung durch den Flansch-Vorsprung führt oder in diesen hineinführt.

Das Hohlrad weist bevorzugt einen achsparallelen Hohlrad-Vorsprung auf, welcher in achsparalleler Richtung den Flansch oder den Flansch-Vorsprung zumindest teilweise übergreift, wobei die Hohlrad-Bohrung durch den Hohlrad-Vorsprung führt.

Bevorzugt wird, wenn der Flansch einen von der Flanschbohrung beabstandeten Flanschanschlag aufweist, der Hohlrad-Vorsprung gegen den Flanschanschlag gespannt ist und der Flanschanschlag von der Flanschbohrung weniger weit beabstandet ist als die Hohlrad-Bohrung von dem Flanschanschlag beabstandet ist.

Insbesondere weisen der Flansch-Vorsprung und der Hohlrad-Vorsprung einander zugewandte Referenzflächen auf, welche durch den eingespannten Stift flächig aneinander gedrückt oder miteinander verspannt sind. Durch eine solche Ausgestaltung wird das Hohlrad beim Eindrücken des Stifts in die Bohrungen in radialer Richtung flächig gegen den Flanschanschlag gedrückt, was das Hohlrad und den Flansch in radialer Richtung fest miteinander verspannt.

Das Paar aus einer solchen Flanschbohrung und einer solchen Hohlrad-Bohrung kann in axialer Richtung zumindest teilweise überlappend angeordnet sein, wobei die Flanschbohrung eine weitere Öffnungsweite als die Hohlrad-Bohrung aufweist.

Insbesondere ist der Stift mittels Presspassung in der Flanschbohrung und der Hohlrad-Bohrung eingepresst.

Bevorzugt wird ein solches Planetengetriebe mit jeweils vier oder mehr solcher Paare aus jeweils einer solchen Flanschbohrung und einer solchen Hohlrad-Bohrung, in denen jeweils ein solcher Stift eingesetzt ist.

Verbessert wird somit ein Planetengetriebe durch eine axiale und radiale Sicherung bzw. Verbindung einerseits eines Hohlrades mit innenseitigem Zahnkranz und andererseits mit beidseitig am Planetengetriebe bzw. dessen äußeren Hohlrädern angebrachten Flanschen. Durch diese Verbindung entsteht keine radiale Verformung des zylindrischen Getriebegehäuses, insbesondere des Hohlrades mit dem Zahnkranz, weshalb entsprechend auch keine damit ansonsten verbundene Unrundheit entsteht. Dies beeinflusst das Geräuschverhalten des Planetengetriebes positiv.

Die spielfreie Positionierung der Zahnkränze bzw. Hohlräder mit den Flanschen erfolgt dabei insbesondere über die versetzte Anordnung der Bohrungen. Beim Eindrücken der Stifte in die versetzten Bohrungen werden die Flansche gegen eine definierte Referenzfläche gehalten bzw. gedrückt. Durch die versetzte Anordnung der Bohrungen werden die Flansche gegen die definierte Referenzfläche gehalten.

Dabei erfolgt die Sicherung der Verbindung insbesondere über einen oder mehrere Zylinderstifte, welche über eine Presspassung in dem Hohlrad bzw. Zahnkranz und in den Flanschen gehalten werden. Durch diese Befestigung sind die radialen Kräfte auf den Zahnkranz des Hohlrades sehr gering und es entsteht keine Verformung, so dass ein Rundlauf verbessert wird. Entsprechend entfallen Verformungen, welche sich negativ auf das Geräuschverhalten auswirken könnten.

Ein Ausführungsbeispiel wird nachfolgend anhand der Zeichnung näher erläutert. Dabei werden gleiche oder gleich wirkende Komponenten in den verschiedenen Figuren mit gleichen Bezugszeichen bezeichnet. Es zeigen:
- Fig. 1: eine Schnittansicht durch einen Ausschnitt eines Planetengetriebes,
- Fig. 2: einen Motor und in axialer Richtung zu diesem Komponenten des Planetengetriebes in auseinandergezogener Darstellung,
- Fig. 3: in vergrößerter Darstellung einen Übergangsbereich zwischen einem Flansch und einem Hohlkranz der Ausgestaltung gemäß Fig. 1, und
- Fig. 4: eine perspektivische Darstellung eines an einen Motor befestigten Planetengetriebes.

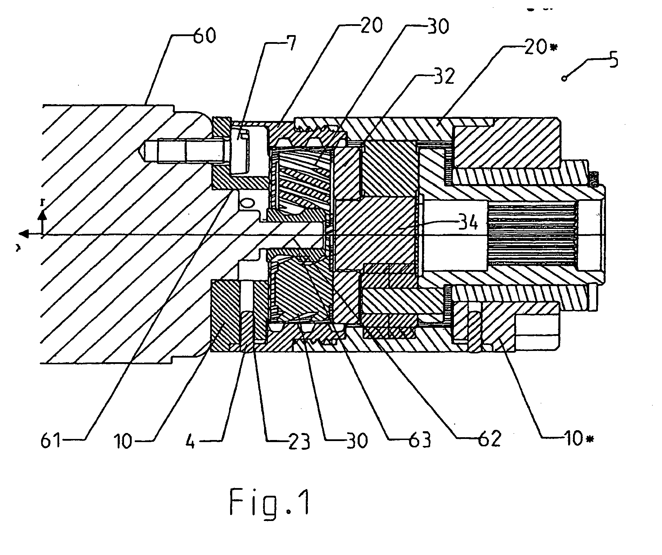

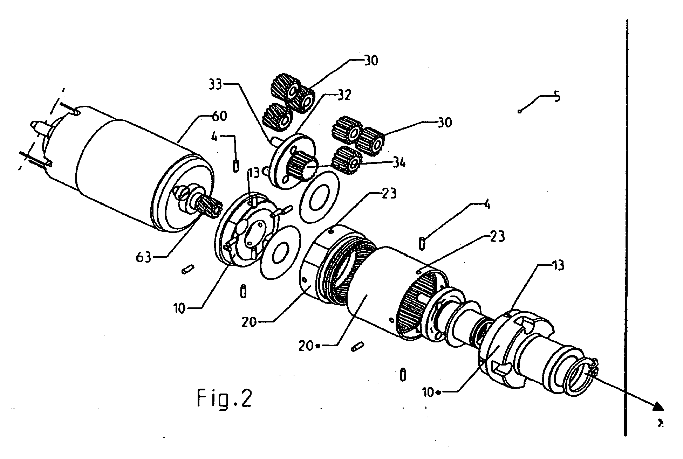

Wie aus Fig. 1 und 2 ersichtlich, ist ein Planetengetriebe 5 an einen Motor 60 angesetzt. Der Motor 60 weist dabei in axialer Richtung x eine aus diesem herausführende Motorwelle 62 mit einem darauf befestigten Motorritzel 63 auf. Die axiale Richtung x bildet somit zugleich eine Rotationsachse der Anordnung. Zum Ansetzen und Befestigen des Planetengetriebes ist die Motorwelle 62 am Motorgehäuse des Motors 60 von einem Motorflansch 61 umgeben.

Das Planetengetriebe 5 weist als Baugruppen an der Antriebsseite und an der Abtriebsseite vorzugsweise jeweils einen Flansch 10, 10* auf. Die Flansche 10, 10* bilden einen Teil eines mehrteiligen Getriebegehäuses aus. Weitere Komponenten des Getriebegehäuses werden durch zumindest ein Hohlrad 20 bzw. eine Vielzahl von axial hintereinander angeordneten Hohlrädern 20, 20* ausgebildet. Die Hohlräder 20, 20* und Flansche 10, 10* sind dabei in axialer Richtung x so miteinander verbunden, dass sie ein festes Getriebegehäuse ausbilden.

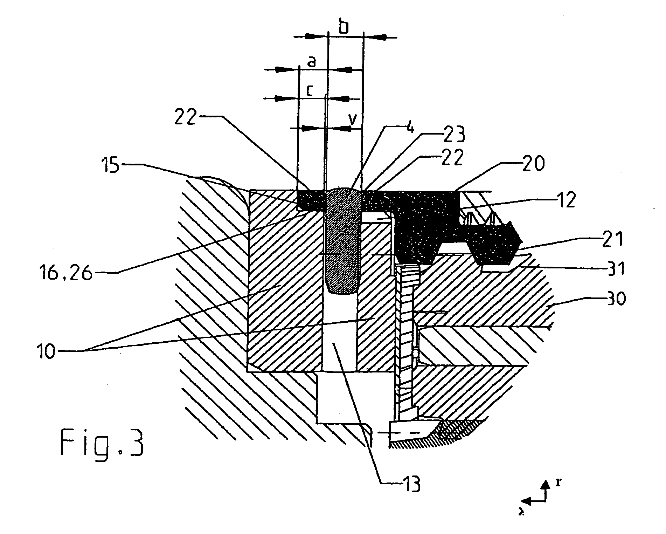

Im Innenraum des durch die Hohlräder 20, 20* ausgebildeten Getriebegehäuses ist eine Vielzahl von Planetenradträgern 32 angeordnet, welche sich in radialer Richtung r um die Rotationsachse drehbar angeordnet sind. Die Planetenradträger 32 weisen achsparallel zur zentralen Rotationsachse Planetenradachsen 33 auf, auf welchen jeweils ein Planetenrad 30 gelagert ist. Mit ihren Planetenrad-Zahnkränzen 31 (Fig. 3) greifen die Planetenräder 30 des dem Motor 60 zugewandten Planetenradträgers 32 in den Zahnkranz des Motorritzels 63 ein. Eine Rotation des Motorritzels 63 bewirkt somit eine gegenläufige Rotation der Planetenräder 30. Auf der den Planetenrädern 30 gegenüberliegenden Seite weist der Planetenradträger 32 ein rotationsfest mit diesem verbundenes Sonnenrad 34 auf, dessen Rotationsachse sich längs der Rotationsachse des Motorritzels 63 erstreckt. In den Zahnkranz des Sonnenrads 34 greifen Planetenräder 30 eines abtriebsseitig angeordneten weiteren Planetenradträgers ein. Das Sonnenrad des letzten Planetenradträgers kann auch als eine Abtriebswelle ausgebildet sein.

Die Hohlräder 20, 20* weisen innenseitig einen Hohlrad-Zahnkranz 21 (Fig. 3) auf, in welchen die Planetenräder 30 mit ihren Planetenrad-Zahnkränzen 31 eingreifen. Eine Rotation des Motorritzels 63 bewirkt somit eine gegenläufige Rotation der Planetenräder 30 und durch deren Eingriff in den Hohlrad-Zahnkranz 21 eine Rotation des Planetenradträgers 32 und seines Sonnenrades 34 gleichgerichtet zu der Rotationsrichtung des Motorritzels 63.

Wie neben den Fig. 1 und 2 vorzugsweise auch Fig. 3 entnehmbar ist, weist das motorseitige Hohlrad 20 einen axialen Hohlrad-Vorsprung 22 auf, welcher sich außenseitig, d.h. von der Rotationsachse beabstandet, achsparallel zur Rotationsachse erstreckt und den dazu benachbarten Flansch 10 teilweise über- oder umgreift. Bei dem abtriebsseitigen Hohlrad 20* ragt ein entsprechender Hohlrad-Vorsprung entsprechend in abtriebsseitiger Richtung, um den abtriebsseitigen Flansch 10* zumindest teilweise zu überoder umgreifen.

Gemäß der bevorzugten Ausführungsform weisen die Flansche 10, 10* in Richtung des zu diesem benachbarten Hohlrades 20, 20* einen axialen Flanschvorsprung 12 auf, welcher alternativ auch als eine Verjüngung des Umfangs bezeichnet werden kann. Dadurch entsteht ein nach außen hin bündig abschließendes Getriebegehäuse, obwohl der Hohlrad-Vorsprung 22 in achsparalleler Richtung einen Teil des Flansches 10 übergreift.

Zur festen Verbindung des Hohlrades 20, 20* mit dem dazu benachbarten Flansch 10, 10* sind durch den axialen Hohlrad-Vorsprung 22 hindurchführende Hohlrad-Bohrungen 23 und in den Flansch bzw. dessen Flanschvorsprung 12 zumindest hineinführende Flansch-Bohrungen 13 mit jeweils einem in diese hineingeführten Stift 4 verbunden. Die Hohlrad- bzw. Flansch-Bohrungen 13, 23 verlaufen bevorzugt in radialer Richtung r. Vorzugsweise sind der oder die Stifte 4 relativ zu den Bohrungsdurchmessern der Hohlrad- bzw. Flansch-Bohrungen 13, 23 so dimensioniert, dass sie über eine Presspassung eingefügt sind und einen sicheren Halt haben. Wie insbesondere Fig. 3 entnehmbar ist, sind die radiale Flanschbohrung 13, welche in den Flansch 10 bzw. den Flanschvorsprung 12 zumindest hineinführt und die radiale Hohlrad-Bohrung 23, welche durch den Hohlrad-Vorsprung 22 hindurchführt, zueinander geringfügig versetzt angeordnet. Dies bewirkt einen besonders guten Halt bzw. eine besonders gute Verspannung des Flansches 10 und des Hohlrades 20 miteinander, wenn der Stift 4 durch die Hohlrad-Bohrung 23 und die Flanschbohrung 13 geführt wird.

Besonders vorteilhaft ist eine Referenzfläche 16 am Flanschvorsprung 12, welche einer Referenzfläche 26 am Hohlrad-Vorsprung 22 gegenüberliegend angeordnet ist und eine flächige Anlagerung der beiden Referenzflächen 16, 26 aneinander ermöglicht. Besonders bevorzugt verlaufen die beiden Referenzflächen 16, 26 dabei zylindrisch und achsparallel zur Rotationsachse.

Zur verbesserten Verspannung des Flanschvorsprungs 12 und des Hohlrad-Vorsprungs 22 weist der Flansch 10 einen Flanschanschlag 15 auf, an welchen ein in axialer Richtung liegender Endabschnitt des Hohlrad-Vorsprungs 22 anliegt. Dabei ist ein Anschlagabstand c des Flanschanschlags 15 zur Flanschbohrung 13 um eine Versatzdifferenz v geringfügig kleiner bzw. kürzer als ein Hohlrad-Überstand a über die Hohlrad-Bohrung 23 hinaus. Eine Flanschbohrungsbreite b, welche vorzugsweise relativ zum Stiftdurchmesser zur Presspassung des Stifts 4 dimensioniert ist, liegt somit dem Flanschanschlag 15 beabstandet geringfügig um einen Flanschbohrungsversatz 14 bzw. die Versatzdifferenz v versetzt der Flanschbohrung 13 gegenüber, bevor der Stift 4 eingesetzt ist.

Zur Befestigung des Flansches 10 am Motor 60 dient vorzugsweise eine Flansch-Befestigungsschraube, wie dies anhand Fig. 1 skizziert ist.

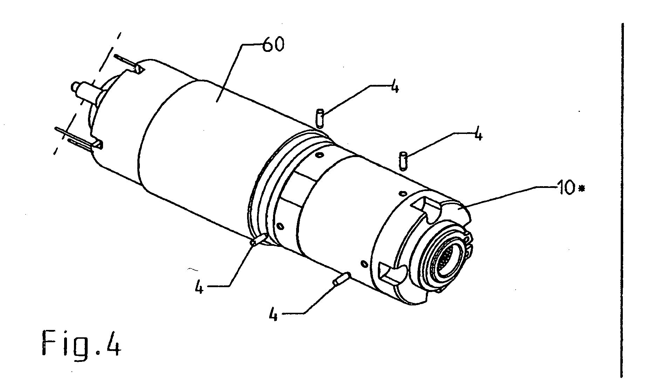

In Fig. 4 ist perspektivisch ein Planetengetriebe 5 an einen Motor 60 mittels vier Stiften 4 befestigt. Ebenfalls durch Verstiftung mit vier Stiften 4 ist der Lagerflansch am Planetengetriebe radial und axial fixiert.

### Bezugszeichenliste:

- 10, 10*: Flansch
- 12: axialer Flanschvorsprung
- 13: radiale Flanschbohrung
- 14: Flanschbohrungsversatz
- 15: Flanschanschlag
- 16: Referenzfläche am Flanschvorsprung
- 20: Hohlrad
- 21: Hohlrad-Zahnkranz
- 22: axialer Hohlrad-Vorsprung
- 23: radiale Hohlrad-Bohrung
- 26: Referenzfläche am Hohlrad-Vorsprung
- 30: Planetenrad
- 31: Planetenrad-Zahnkranz
- 32: Planetenradträger
- 33: Planetenradachse
- 34: Sonnenrad
- 4: Stift
- 5: Planetengetriebe
- 60: Motor
- 61: Motor-Flansch
- 62: Motorwelle
- 63: Motorritze
- 7: Flansch-Befestigungsschraube
- a: Hohlrad-Überstand über Hohlrad-Bohrung
- b: Flanschbohrungsbreite
- c: Anschlagabstand zu Flanschbohrung
- r: radiale Richtung
- v: Versatzdifferenz
- x: axiale Richtung

## Patentansprüche

1. Getriebe, insbesondere Planetengetriebe (5), mit
- zumindest einem Flansch (10, 10*) zum Anpassen des Getriebes (5) an eine Antriebskomponente und
- zumindest einem Hohlrad (20, 20*), welches getriebeseitig mit dem Flansch (10, 10*) fest verbunden ist,
wobei
- der Flansch (10, 10*) zumindest eine radiale Flanschbohrung (13) aufweist,
- das Hohlrad (20, 20*) zumindest eine radiale Hohlrad-Bohrung (23) aufweist, und
- ein Stift (4) durch ein Paar aus einer solchen radialen Flanschbohrung (13) und einer solchen radialen Hohlrad-Bohrung (23) geführt ist und dabei den Flansch (10, 10*) und das Hohlrad (20, 20*) fest miteinander verspannt, **dadurch gekennzeichnet**, dass das Paar aus einer solchen Flanschbohrung (13) und einer solchen Hohlrad-Bohrung (23) in axialer Richtung zumindest teilweise überlappend und zugleich teilweise zueinander um eine Versatzdifferenz (v) versetzt angeordnet ist.

2. Getriebe (5) nach Anspruch 1, bei dem
- der Flansch (10, 10*) einen Flansch-Vorsprung (12) aufweist, welcher sich planetengetriebeseitig in achsparalleler Richtung erstreckt, und
- die zumindest eine Flanschbohrung (13) durch den Flansch-Vorsprung (12) führt oder in diesen hineinführt.

3. Getriebe (5) nach Anspruch 1 oder 2, bei dem das Hohlrad (20, 20*) einen achsparallelen Hohlrad-Vorsprung (22) aufweist, welcher in achsparalleler Richtung den Flansch oder den Flansch-Vorsprung (12) übergreift, und
- die Hohlrad-Bohrung (23) durch den Hohlrad-Vorsprung (22) führt.

4. Getriebe (5) nach Anspruch 3, bei dem
- der Flansch (10) einen von der Flanschbohrung (13) beabstandeten Flanschanschlag (15) aufweist,
- der Hohlrad-Vorsprung (22) gegen den Flanschanschlag (15) gespannt ist und
- der Flanschanschlag (15) von der Flanschbohrung (13) weniger weit beabstandet ist als die Hohlrad-Bohrung (23) von dem Flanschanschlag (15) beabstandet ist.

5. Getriebe (5) nach Anspruch 2 und 3 oder 2 und 4, bei dem der Flansch-Vorsprung (12) und der Hohlrad-Vorsprung (22) einander zugewandte Referenzflächen aufweisen, welche durch den eingespannten Stift (4) flächig aneinander gedrückt oder miteinander verspannt sind.

6. Getriebe (5) nach einem vorstehenden Anspruch, bei dem der Stift (4) mittels Presspassung in der Flanschbohrung (13) und der Hohlrad-Bohrung (23) eingepresst ist.

7. Getriebe (5) nach einem vorstehenden Anspruch mit jeweils vier oder mehr solcher Paare aus jeweils einer solchen Flanschbohrung (13) und einer solchen Hohlrad-Bohrung (23), in denen jeweils ein solcher Stift (4) eingesetzt ist.

## Claims

1. A gear mechanism, in particular a planetary gear mechanism (5), with
- at least one flange (10, 10*) for adapting the gear mechanism (5) to a drive component, and
- at least one hollow wheel (20, 20*) which is connected to the flange (10, 10*) in a fixed manner on the gear mechanism side,
wherein
- the flange (10, 10*) has at least one radial flange bore (13),
- the hollow wheel (20, 20*) has at least one radial hollow wheel bore (23), and
- a pin (4) extends through a pair comprising a radial flange bore (13) of such a type and a radial hollow wheel bore (23) of such a type and in this case braces the flange (10, 10*) and the hollow wheel (20, 20*) firmly against each other,
**characterized in that** the pair comprising a flange bore (13) of such a type and a hollow wheel bore (23) of such a type are arranged overlapping at least in part in the axial direction and at the same time are arranged offset in part with respect to each other by an offset difference (v).

2. A gear mechanism (5) according to claim 1, in which
- the flange (10, 10*) has a flange projection (12) which extends in an axially parallel direction on the planetary gear mechanism side, and
- the at least one flange bore (13) leads through the flange projection (12) or leads into it.

3. A gear mechanism (5) according to claim 1 or 2, in which the hollow wheel (20, 20*) has an axially parallel hollow wheel projection (22) which engages over the flange or the flange projection (12) in the axially parallel direction, and
- the hollow wheel bore (23) leads through the hollow wheel projection (22).

4. A gear mechanism (5) according to claim 3, in which
- the flange (10) has a flange stop (15) situated at a distance from the flange bore (13),
- the hollow wheel projection (22) is stressed against the flange stop (15), and
- the flange stop (15) is situated at a shorter distance from the flange bore (13) than the hollow wheel bore (23) is situated from the flange stop (15).

5. A gear mechanism (5) according to claim 2 and 3 or 2 and 4, in which the flange projection (12) and the hollow wheel projection (22) have reference faces which are directed towards each other and which are pressed flat against each other by a clamped pin (4) or are braced with each other.

6. A gear mechanism (5) according to any preceding claim, in which the pin (4) is pressed into the flange bore (13) and the hollow wheel bore (23) by means of press fitting.

7. A gear mechanism (5) according to any preceding claim, with in each case four or more pairs of such a type comprising a flange bore (13) of such a type and a hollow wheel bore (23) of such a type, into which a pin (4) of such a type is inserted in each case.

## Revendications

1. Transmission, notamment transmission planétaire (5) comportant :
- au moins une bride (10, 10*) pour adapter la transmission (5) à un composant à entraîner, et
- au moins une roue creuse (20, 20*) dont le côté transmission est relié solidairement à la bride (10, 10*), transmission **caractérisée en ce que**
- la bride (10, 10*) comporte au moins un perçage radial (13) dans la bride,
- la roue creuse (20, 20*) comporte au moins un perçage radial (23),
- une broche (4) est engagée dans la paire composée par un perçage radial (13) de la bride et un perçage radial de la roue creuse (23), pour relier solidairement la bride (10, 10*) et la roue creuse (20, 20*), et
- la paire constituée par un perçage de bride (13) et un perçage de roue creuse (23), a un chevauchement au moins partiel dans la direction axiale et en même temps partiellement une différence de décalage (v) relative.

2. Transmission (5) selon la revendication 1,
**caractérisée en ce que**
- la bride (10, 10*) comporte une saillie de bride (12) qui arrive dans la direction parallèle à l'axe du côté de la transmission planétaire, et
- au moins un perçage de bride (13) traverse ou passe dans la saillie de bride (12).

3. Transmission (5) selon la revendication 1 ou 2, **caractérisée en ce que**
- la roue creuse (20, 20*) comporte une saillie de roue creuse (22), parallèle à l'axe, et qui chevauche la bride ou la saillie de bride (12) dans la direction parallèle à l'axe, et
- le perçage de roue creuse (23) traverse la saillie de roue creuse (22).

4. Transmission (5) selon la revendication 3,
**caractérisée en ce que**
- la bride (10) comporte une butée de bride (15) écartée du perçage de bride (13),
- la saillie de roue creuse (22) est serrée contre la butée de bride (15), et
- la butée de bride (15) est moins éloignée du perçage de bride (13) que le perçage de roue creuse (23) est écarté de la butée de bride (15).

5. Transmission (5) selon l'une des revendications 2 et 3 ou 2 et 4,
dans laquelle
la saillie de bride (12) et la saillie de roue creuse (22), ont des surfaces de référence tournées l'une vers l'autre et qui sont poussées ou serrées l'une contre l'autre en surface par la broche (4) insérée.

6. Transmission (5) selon l'une des revendications précédentes, **caractérisée en ce que**
la broche (4) est pressée par un ajustage pressé dans le perçage de bride (13) et dans le perçage de roue creuse (23).

7. Transmission (5) selon l'une des revendications précédentes, **caractérisée par**
au moins quatre paires formées chacune d'un perçage de bride (13) et d'un perçage de roue creuse (23) avec une broche (4) respective.
